# EUROPÄISCHE PATENTSCHRIFT

(11) **EP 2 709 791 B1**
(45) Veröffentlichungstag und Bekanntmachung des Hinweises auf die Patenterteilung: **11.01.2017**
(21) Anmeldenummer: 12720207.5
(22) Anmeldetag: 14.05.2012
(51) Int. Cl.: B23K 26/26, B23K 26/34

(54) **VORRICHTUNG UND VERFAHREN ZUM HERSTELLEN EINES MAßGESCHNEIDERTEN BLECHBANDES ODER METALLPROFILS**
DEVICE AND METHOD FOR PRODUCING A CUSTOMIZED SHEET METAL STRIP OR METAL PROFILE
DISPOSITIF ET PROCÉDÉ DE FABRICATION D'UN PROFILÉ MÉTALLIQUE OU D'UN FEUILLARD SOUDÉ

(30) Priorität: 19.05.2011 DE 102011050476
(43) Veröffentlichungstag der Anmeldung: 26.03.2014
(73) Patentinhaber: WISCO Lasertechnik GmbH, 88212 Ravensburg (DE)
(72) Erfinder: ALBER, Gerhard, 88276 Berg (DE); RETZBACH, Martin, 88276 Berg (DE)
(74) Vertreter: Otten, Roth, Dobler & Partner mbB Patentanwälte
(86) Internationale Anmeldenummer: PCT/EP2012/058866
(87) Internationale Veröffentlichungsnummer: WO 2012/156347

(56) Entgegenhaltungen:
- WO-A1-2010/045571
- DE-A1- 19 852 462
- DE-A1-102008 046 160
- DE-A1-102008 060 467
- DE-A1-102009 021 112
- JP-A- 8 281 306

## Beschreibung

Die Erfindung betrifft eine Vorrichtung zum Herstellen eines maßgeschneiderten Blechbandes, mit mindestens einer Schweißstation, mittels welcher mindestens zwei Blechbänder entlang ihrer Längskanten miteinander verschweißbar sind, und mit mindestens zwei Bandzuführungseinrichtungen zum Zuführen von jeweils einem der Blechbänder in die mindestens eine Schweißstation, wobei die mindestens zwei Bandzuführungseinrichtungen und die mindestens eine Schweißstation eine Fertigungslinie definieren. Ferner betrifft die Erfindung ein Verfahren zum Herstellen eines maßgeschneiderten Blechbandes oder Metallprofils, bei dem mindestens zwei Blechbänder mittels mindestens zweier Bandzuführungseinrichtungen einer Schweißstation zugeführt und entlang ihrer Längskanten miteinander verschweißt werden, wobei die mindestens zwei Bandzuführungseinrichtungen und die mindestens eine Schweißstation eine Fertigungslinie definieren.

Die Herstellung von maßgeschneiderten Blechbändern, sogenannten "Tailored Strips", ist bekannt und unter anderem in der DE 10 2008 038 655 A1 beschrieben. Die Blechbänder werden nach der Verschweißung entlang ihrer Längskanten aufgehaspelt und als Coil dem Kunden zur Weiterverarbeitung, beispielsweise zur Herstellung von Längsträgern für Kraftfahrzeugkarosserien, zur Verfügung gestellt.

Der vorliegenden Erfindung liegt die Aufgabe zugrunde, eine Vorrichtung und ein Verfahren der eingangs genannten Art dahingehend zu verbessern, dass sie gegenüber herkömmlichen Vorrichtungen und Verfahren dieser Art mindestens eine zusätzliche Fertigungsfunktion bieten, so dass sich in der Fertigungslinie relativ kostengünstig ein höherwertiges Halbzeug oder gar Fertigprodukt herstellen lässt.

Diese Aufgabe wird zum einen durch eine Vorrichtung mit den Merkmalen des Anspruchs 1 und zum anderen durch ein Verfahren mit den Merkmalen des Anspruchs 10 gelöst. Die erfindungsgemäße Vorrichtung ist dadurch gekennzeichnet, dass in der von den Bandzuführungseinrichtungen und der Schweißstation definierten Fertigungslinie mindestens eine Weiterbearbeitungsstation zur Weiterbearbeitung des maßgeschneiderten Blechbandes integriert ist, wobei die Weiterbearbeitungsstation der mindestens einen Schweißstation in Bandlaufrichtung nachgeordnet und mit Werkzeugen zum Aufbringen von Verstärkungsmaterial an lokalen Stellen von mindestens einem der miteinander verbundenen Blechbändern, ausgestattet ist. Die erfindungsgemäße Vorrichtung bietet somit gegenüber herkömmlichen Vorrichtungen zur Herstellung von maßgeschneiderten Blechbändern ("Tailored Strips") mindestens eine zusätzliche Fertigungsfunktion. Aus den maßgeschneiderten Blechbändern können so in einer einheitlichen Fertigungslinie (Prozesskette) höherwertige Halbzeuge oder in bestimmten Fällen sogar Fertigprodukte relativ kostengünstig hergestellt werden. Mit der erfindungsgemäßen Vorrichtung lässt sich eine höhere Fertigungstiefe erzielen. Durch die höhere Fertigungstiefe kann zugleich eine höhere Produktivität als bei einer auf mehrere Standorte aufgeteilten Fertigung erreicht werden. Eine höhere Produktivität ermöglicht eine Kostenverringerung. Des Weiteren führt eine höhere Fertigungstiefe erfahrungsgemäß auch zu einer Verbesserung der Qualität der hergestellten Halbzeuge bzw. Fertigprodukte, da die verschiedenen Fertigungsschritte bei hoher Produktivität optimal aufeinander abgestimmt werden können.

Eine vorteilhafte Ausgestaltung des erfindungsgemäßen Verfahrens ist dadurch gekennzeichnet, dass das Verschweißen der mindestens zwei Blechbänder in der Schweißstation bei kontinuierlichem Bandvorschub bzw. konstanter Schweißgeschwindigkeit durchgeführt wird, während die miteinander verschweißten Blechbänder in Bandlaufrichtung hinter der Schweißstation derart geführt werden, dass sie eine Bandschlaufe bilden, und hinter der Bandschlaufe intermittierend weiterbewegt werden, wobei mindestens eines der Blechbänder während einer Stillstandphase eines Abschnittes des maßgeschneiderten Blechbandes in der mindestens einen Weiterbearbeitungsstation bearbeitet wird. Auf diese Weise können insbesondere lokal Verstärkungselemente in Form von Blechzuschnitten auf mindestens eines der miteinander verbundenen Blechbänder des maßgeschneiderten Blechbandes aufgebracht werden. Je nach Anwendung kann ein solches bereichsweise verstärktes maßgeschneidertes Blechband zu einem Coil aufgewickelt oder abgelängt werden, wobei das Ablängen mittels eines mechanischen oder thermischen Schneidwerkzeuges, insbesondere mittels eines Schneidbrenners, vorzugsweise Laserschneidbrenners erfolgen kann. Das Ablängen des maßgeschneiderten Blechbandes wird besonders bevorzugt während der Stopp-Phase des intermittierend bewegten Bandabschnittes bzw. während des Aufbringens der lokalen Verstärkungselemente ausgeführt.

Eine andere vorteilhafte Ausgestaltung des erfindungsgemäßen Verfahrens ist dadurch gekennzeichnet, dass das Verschweißen der mindestens zwei Blechbänder in der Schweißstation und auch das Bearbeiten mindestens eines der miteinander verschweißten Blechbänder in der mindestens einen Weiterbearbeitungsstation jeweils bei kontinuierlichem Bandvorschub durchgeführt werden, wobei ein Schweißwerkzeug, ein Stanzwerkzeug und/oder ein Clinchwerkzeug zum Bearbeiten des mindestens einen der miteinander verschweißten Blechbänder in der Weiterbearbeitungsstation mit den miteinander verschweißten Blechbändern mitbewegt wird. Bei dieser Ausgestaltung des erfindungsgemäßen Verfahrens kann auf die Ausbildung einer Bandschlaufe als Bandspeicher für den Ausgleich zwischen kontinuierlichem und intermittierenden Bandvorschub verzichtet werden. Das aus den entlang ihrer Längskanten miteinander verschweißten Blechbändern hergestellte maßgeschneiderte Blechband muss bei dieser Ausgestaltung des Verfahrens weder verzögert noch beschleunigt werden. Dies kann insbesondere beim Verbinden von relativ dicken, schweren und/oder biegesteifen Metallbändern, die in einer Anlage zur Herstellung von Tailored Strips gegebenenfalls zu hohen dynamischen Belastungen führen und eine entsprechend aufwendigere Konstruktion bzw. Lagerung der Anlage erfordern, von Vorteil sein. Das zur Weiterbearbeitung des maßgeschneiderten Blechbandes in der Fertigungslinie verwendete Handhabungsgerät bzw. Werkzeug, beispielsweise Schweißwerkzeug, wird dagegen oft eine relativ geringe Masse aufweisen bzw. lässt sich konstruktiv einfacher beschleunigen und verzögern.

Weitere bevorzugte und vorteilhafte Ausgestaltungen der erfindungsgemäßen Vorrichtung und des erfindungsgemäßen Verfahrens sind in den Unteransprüchen angegeben.

Nachfolgend wird die Erfindung anhand einer mehrere Ausführungsbeispiele darstellenden Zeichnung näher erläutert. Es zeigen schematisch:
- Fig. 1: ein erstes Ausführungsbeispiel einer erfindungsgemäßen Vorrichtung in perspektivischer Darstellung;
- Fig. 2a: einen Längsabschnitt eines maßgeschneiderten Blechbandes, in Draufsicht;
- Fig. 2b: eine Querschnittansicht des Blechbandes der Fig. 2a entlang der Schnittlinie II-II der Fig. 2a;
- Fig. 3: ein zweites Ausführungsbeispiel einer erfindungsgemäßen Vorrichtung in perspektivischer Darstellung;
- Fig. 4a bis 4c: ein Pressenwerkzeug der Vorrichtung gemäß Fig. 3 zum Durchsetzfügen eines Verstärkungsblechs mit einem Abschnitt eines maßgeschneiderten Blechbandes, in perspektivischer Vertikalschnittansicht;

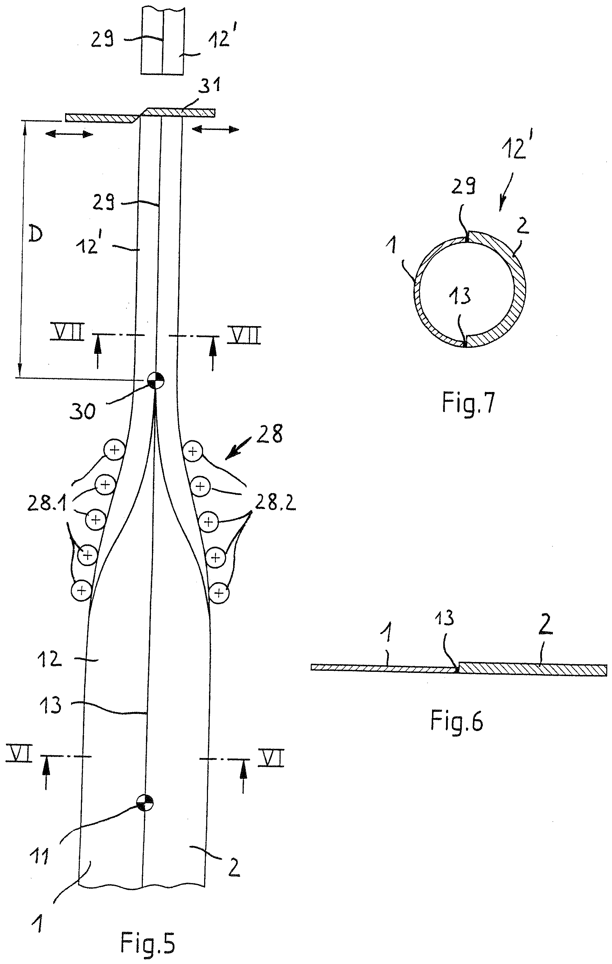

- Fig. 5: ein drittes Ausführungsbeispiel einer erfindungsgemäßen Vorrichtung, von der lediglich ein Abschnitt in Draufsicht dargestellt ist;
- Fig. 6: eine Querschnittansicht eines in der Vorrichtung gemäß Fig. 5 hergestellten maßgeschneiderten Blechbandes entlang der Schnittlinie VI-VI der Fig. 5; und
- Fig. 7: eine Querschnittansicht eines in der Vorrichtung gemäß Fig. 5 hergestellten maßgeschneiderten Profils bzw. Rohres entlang der Schnittlinie VII-VII der Fig. 5.

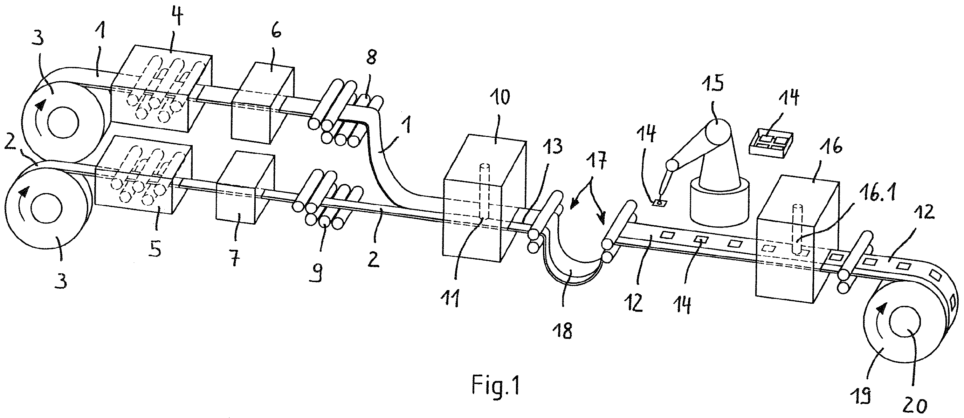

In Fig. 1 ist ein erstes Ausführungsbeispiel einer erfindungsgemäßen Vorrichtung bzw. Anlage zur Herstellung von maßgeschneiderten Blechbändern ("Tailored Strips") 12 dargestellt. In der Vorrichtung werden mindestens zwei Spaltbänder 1, 2 unterschiedlicher Dicke, Werkstoffgüte und/oder Oberflächenbeschaffenheit längsseitig miteinander verschweißt. Die Spaltbänder 1, 2 können typischerweise aus Stahlbändern unterschiedlicher Güte und/oder Dicke gefertigt sein. Ebenso können die Tailored Strips 12 aber auch aus Nichteisen-Blechbändern, beispielsweise aus Aluminium- und/oder Magnesiumbändern unterschiedlicher Güten und/oder Dicken hergestellt werden. Des Weiteren können die maßgeschneiderten Blechbänder 12 auch aus einer Kombination von unterschiedlichen Werkstoffen gebildet werden, zum Beispiel aus einer Kombination von Stahlband und Nichteisenband, einer Kombination von Aluminium und Magnesium, etc.

Die miteinander zu verschweißenden Spaltbänder 1, 2 liegen in Form von Coils 3 vor. Die einzelnen Spaltbänder bzw. Blechbänder 1, 2 werden zunächst nach dem Abwickeln vom jeweiligen Coil 3 in separaten Richtmaschinen 4, 5 geebnet. Im Anschluss daran erfolgt vorzugsweise eine Kantenbearbeitung, wobei zumindest die zu verschweißenden Kanten der Spaltbänder 1, 2 mittels Fräs- und/oder Schleifmaschinen 6, 7 auf den nachfolgenden Schweißprozess vorbereitet werden können.

Die Spaltbänder 1, 2 werden mittels separater Fördermittel (Treibereinheiten) 8, 9 und Bandführungseinrichtungen, beispielsweise Bandführungsrollen, einer oder bei mehr als zwei Spaltbändern 1, 2 einer entsprechend größeren, jeweils um Eins reduzierten Anzahl von in Bandlaufrichtung hintereinander angeordneten Schweißvorrichtungen 10 zugeführt und dort im Durchlauf miteinander verschweißt. Die Spaltbänder 1, 2 werden dabei üblicherweise so zusammengeführt, dass ihre einander zugewandten Längskanten miteinander stumpf verschweißt werden können. Es liegt allerdings auch im Rahmen der vorliegenden Erfindung, die Spaltbänder 1, 2 oder bei mehr als zwei Spaltbändern 1, 2 zumindest zwei der Spaltbänder miteinander überlappend zu verschweißen.

Die Spaltbänder 1, 2 können endlos miteinander verschweißt werden. Als Schweißverfahren kommt dabei vorzugsweise Laserschweißen zum Einsatz. Alternativ kann als Schweißverfahren aber beispielsweise auch Hochfrequenzschweißen oder Reibrührschweißen (Friction Stir Welding = FSW) bei der Durchführung des erfindungsgemäßen Verfahrens angewandt werden. Dem Arbeitspunkt 11 des Schweiß- bzw. Laserstrahls wird vorzugsweise Schutzgas (Inertgas), z.B. Stickstoffgas zugeführt, um eine Oxidation der Schweißnaht 13 zu verhindern. Des Weiteren wird die mindestens eine Schweißnaht 13 vorzugsweise lokal durch eine Nacherwärmung wärmebehandelt, um mögliche Spannungsspitzen abzubauen oder wenigstens zu verringern.

Alternativ oder ergänzend zu der Nahtnacherwärmung wird das maßgeschneiderte Blechband 12 über seine gesamte Breite oder über die Breite eines seiner Blechbänder (Spaltbänder) 1, 2 temporär erwärmt, um die Gefügestruktur des Blechbandes 12 zu homogenisieren. Das Blechband 12 wird dabei auf eine Temperatur im Bereich von 200°C bis 500°C erwärmt. Die temporäre Erwärmung erfolgt vorzugsweise in einer Inertgasatmosphäre.

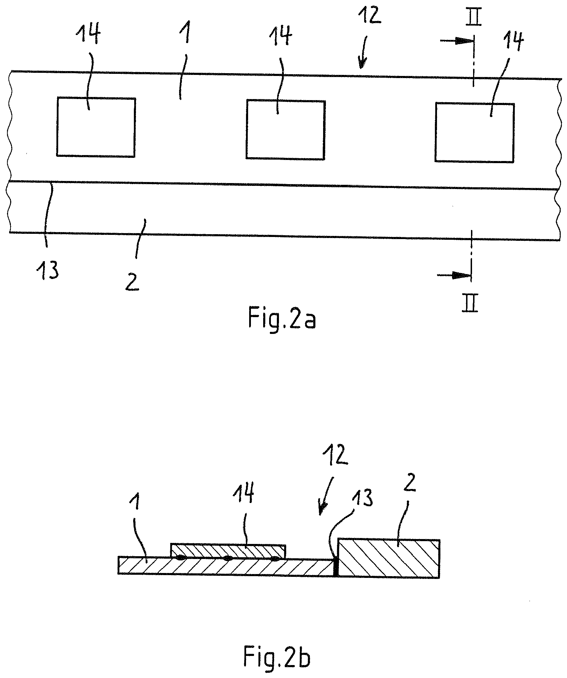

Die Bandzuführungseinrichtungen 4, 5, 8, 9 und die mindestens eine Schweißstation 10 definieren eine Fertigungslinie. Erfindungsgemäß ist in der Fertigungslinie mindestens eine Weiterbearbeitungsstation integriert, die der mindestens einen Schweißstation 10 in Bandlaufrichtung nachgeordnet ist und Mittel zum Aufbringen von lokalen Verstärkungen 14 aufweist. Bei den Verstärkungen 14 kann es sich beispielsweise um im Wesentlichen ebene Blechzuschnitte (sogenannte "Patches") handeln, die mittels eines Handhabungsgerätes oder eines Roboters 15 auf vorgegebene Stellen mindestens eines der miteinander verbundenen Blechbänder (Spaltbänder) 1, 2 aufgebracht werden. Im Falle eines aus unterschiedlich dicken Spaltbändern 1, 2 gebildeten maßgeschneiderten Blechbandes 12 werden die Verstärkungselemente 14 vorzugsweise auf das dünnere (1) oder die dünneren Spaltbänder des Blechbandes 12 aufgebracht (vgl. Figuren 2a und 2b). Die Verstärkungselemente 14 werden durch Punktschweißen, Durchsetzfügen (Clinchen) oder Herstellen länglicher oder umlaufender Schweißnähte mittels Laserschweißen, vorzugsweise mittels Laser-Remote-Schweißen, mit dem bzw. den Spaltbändern 1, 2 des Blechbandes 12 verbunden.

Beim Fügen der Verstärkungselemente 14 durch Laserschweißen wird der Laserstrahl nach der Fokussierung vorzugsweise mit einem Spiegelscanner (nicht gezeigt) über das Werkstück bewegt. Der Spiegelscanner umfasst beispielsweise mehrere drehbare Facettenspiegel oder verkippbare Ablenkspiegel, die den Laserstrahl entsprechend den eingestellten Winkel der Spiegel auf unterschiedliche Orte des Werkstücks richten können. Der Laserstrahl bzw. dessen Arbeitspunkt lässt sich so mit hoher Geschwindigkeit positionieren. Diese Art des Fügens wird auch als Laser-Remote-Schweißen bezeichnet.

Die Bearbeitungsstation zum Fügen der Verstärkungselemente 14 ist in Fig. 1 mit 16 bezeichnet. Während das endlose Verschweißen der Blechbänder (Spaltbänder) 1, 2 vorzugsweise mit im Wesentlichen konstanter Schweißgeschwindigkeit erfolgt, erfordert das Fügen der Verstärkungselemente 14 gegebenenfalls eine Unterbrechung des Bandvorschubes. Zu diesem Zweck ist zwischen der Schweißstation 10, mittels welcher die mindestens zwei Blechbänder 1, 2 entlang mindestens einer ihrer Längskanten miteinander verschweißt werden, und der Stelle, an welcher die Verstärkungselemente 14 auf mindestens eines der Blechbänder 1, 2 aufgebracht und sodann mit dem Blechband fest verbunden werden, eine Speichereinrichtung 17 zur Aufnahme einer Bandschlaufe 18 angeordnet (vgl. Fig. 1).

Je nach Anwendung können die auf diese Weise lokal verstärkten Blechbänder (Tailored Strips) 12 am Ende der Fertigungslinie zu einem Coil 19 aufgewickelt oder alternativ mittels einer Schneideinrichtung (in Fig. 1 nicht gezeigt) in maßgeschneiderte Bleche gewünschter Länge quergeteilt werden. Die Schneideinrichtung zum Ablängen des maßgeschneiderten Blechbandes 12 kann dabei ein mechanisches Schneidwerkzeug oder einen Schneidbrenner, vorzugsweise einen Laserschneidbrenner aufweisen. Die in Fig. 1 dargestellte Fertigungslinie umfasst an ihrem Ende eine Aufwickeleinrichtung 20 zum Aufhaspeln des lokal verstärkten maßgeschneiderten Blechbandes 12.

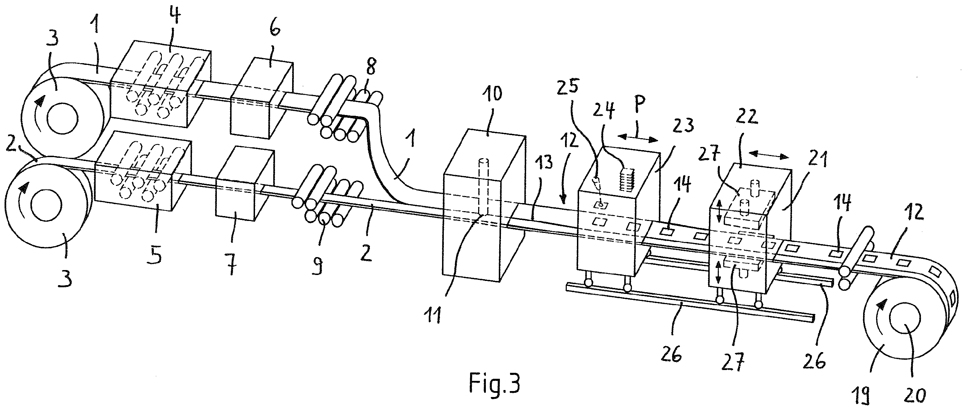

Das in Fig. 3 dargestellte Ausführungsbeispiel einer erfindungsgemäßen Vorrichtung (Anlage) unterscheidet sich von dem in Fig. 1 gezeigten Ausführungsbeispiel im Wesentlichen dadurch, dass das mindestens eine Werkzeug zur Weiterbearbeitung des maßgeschneiderten Blechbandes 12 mittels eines beweglich gelagerten Trägers 21 gehalten und mittels des Trägers 21 in Bandlaufrichtung vor- und zurückbewegbar ist, so dass eine Weiterbearbeitung des maßgeschneiderten Blechbandes 12 in der Fertigungslinie ohne Unterbrechung des Bandvorschubes möglich ist. Dementsprechend weist die in Fig. 3 gezeigte Vorrichtung zwischen der mindestens einen Schweißstation 10 und der Weiterbearbeitungsstation 22 keine Bandspeichereinrichtung in Form einer Bandschlaufe auf.

Auch bei dem in Fig. 3 dargestellten Ausführungsbeispiel werden Verstärkungselemente 14, zum Beispiel Blechzuschnitte (Patches), auf vorgegebene Stellen mindestens eines der miteinander verschweißten Blechbänder 1, 2 aufgebracht. Hierzu weist die Vorrichtung einen längs des Blechbandes 12 verfahrbaren Wagen 23 auf, der mit einem Magazin 24 zur Aufnahme eines Vorrats an Verstärkungselementen 14 und einer Entnahme- und Zuführeinrichtung 25 zur Entnahme eines einzelnen Verstärkungselements aus dem Magazin 24 und zur Zuführung des entnommenen Verstärkungselements 14 auf mindestens eines der miteinander verschweißten Blechbänder 1, 2 versehen ist. Der Wagen 23 ist durch mindestens eine Führungsschiene 26 geführt und kann in Richtung des Doppelpfeils P verfahren werden. Anstelle eines derartigen Magazinwagens 23 kann jedoch in der Vorrichtung der Fig. 3 auch ein geeignetes Handhabungsgerät, insbesondere ein Roboter 15 zum lokalen Aufbringen von Verstärkungselementen 14 zum Einsatz kommen.

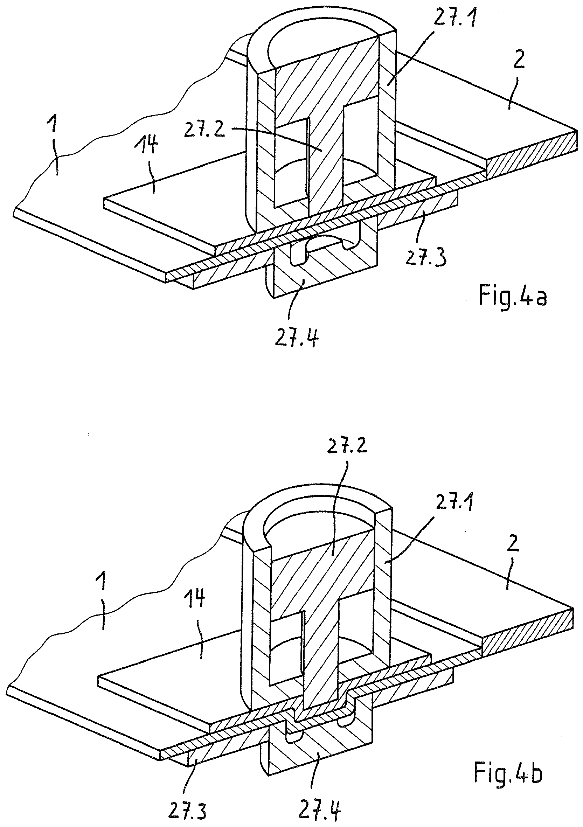

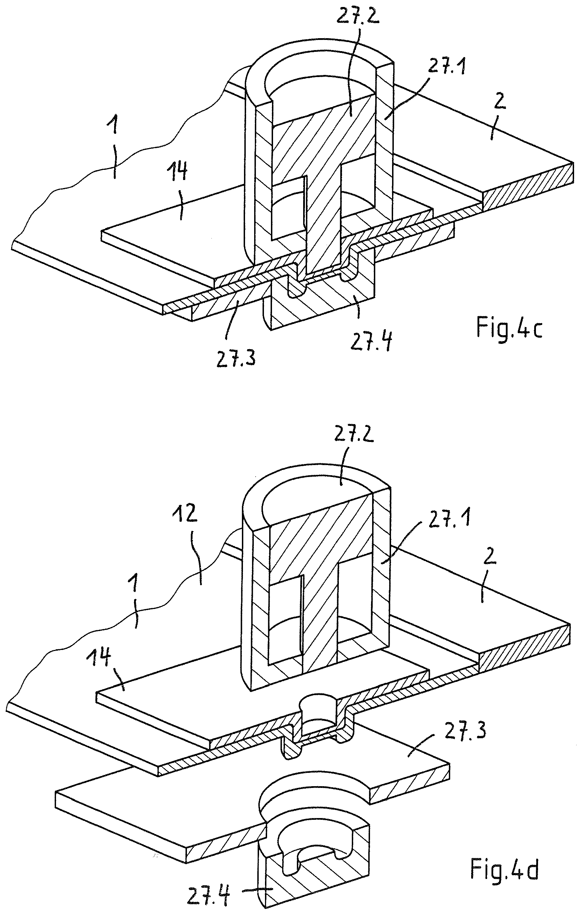

Das Fügen der auf das Spaltband 1 bzw. Blechband 12 aufgebrachten Verstärkungselemente 14 erfolgt in der Vorrichtung der Fig. 3 durch Clinchen. Das Clinchwerkzeug 27 ist ebenfalls an einem beweglich gelagerten Träger 21 gehalten und kann mittels des Trägers 21 in Bandlaufrichtung vor- und zurückbewegt werden. Der Träger 21 kann hierzu wiederum wagenartig ausgebildet und an einer Führungsschiene 26 parallel zur Längsachse des hergestellten Blechbandes 12 geführt sein. Das Clinchwerkzeug 27 umfasst einen Niederhalter 27.1, einen relativ zum Niederhalter 27.1 beweglichen Stempel 27.2, eine dem Niederhalter 27.1 zugeordnete Gegendruckplatte 27.3 zum Einspannen der miteinander zu verbindenden Bleche bzw. Blechbänder 1, 14 und eine dem Stempel 27.2 zugeordnete Matrize 27.4, wobei die Gegendruckplatte 27.3 nach der kraft- und formschlüssigen Verbindung der Bleche 1, 14 zudem als Auswerfer fungiert (vgl. Figuren 4a bis 4d).

Die Aggregate bzw. Einrichtungen 21 bis 25 zum Aufbringen und Fügen der Verstärkungselemente 14 werden aus ihrer jeweiligen Ausgangsstellung heraus auf die Geschwindigkeit des Bandvorschubes beschleunigt und positionieren das jeweilige Verstärkungselement 14 auf dem Blechband 12 bzw. führen den zur festen Verbindung von Verstärkungselement 14 und Blechband 12 erforderlichen Arbeitsschritt durch, sobald Gleichlauf mit dem Blechband 12 erreicht ist. Anschließend wird das jeweilige Aggregat (Wagen) 21, 22 bzw. 23 im Eilgang in seine Ausgangsstellung für den nächsten Arbeitsschritt zurückgefahren.

Anstelle eines Clinchwerkzeuges 27 kann das verfahrbare Aggregat 22 auch ein Schweißwerkzeug, vorzugsweise einen Laserschweißkopf, zum Fügen der Verstärkungselemente 14 aufweisen.
Die Ausführung der vorliegenden Erfindung ist nicht auf die vorstehend beschriebenen und in der Zeichnung dargestellten Ausführungsbeispiele beschränkt. Vielmehr sind zahlreiche Varianten denkbar, die auch bei von den Ausführungsbeispielen abweichender Gestaltung von der in den beiliegenden Ansprüchen angegebenen Erfindung Gebrauch machen.

## Patentansprüche

1. Vorrichtung zum Herstellen eines maßgeschneiderten Blechbandes (12), mit mindestens einer Schweißstation (10), mittels welcher mindestens zwei Blechbänder (1, 2) entlang ihrer Längskanten miteinander verschweißbar sind, und mindestens zwei Bandzuführungseinrichtungen (8, 9) zum Zuführen von jeweils einem der Blechbänder in die mindestens eine Schweißstation (10), wobei die mindestens zwei Bandzuführungseinrichtungen (8, 9) und die mindestens eine Schweißstation (10) eine Fertigungslinie definieren, **dadurch gekennzeichnet, dass** in der Fertigungslinie mindestens eine Weiterbearbeitungsstation (15, 16; 22, 23; 28) zur Weiterbearbeitung integriert ist, die der mindestens einen Schweißstation (10) in Bandlaufrichtung nachgeordnet und mit Werkzeugen zum Aufbringen von Verstärkungsmaterial (14) an lokalen Stellen von mindestens einem der miteinander verbundenen Blechbändern (1, 2), ausgestattet ist.

2. Vorrichtung nach Anspruch 1,
**dadurch gekennzeichnet, dass** die mindestens eine Weiterbearbeitungsstation mit einem Handhabungsgerät und/oder einem Roboter (15) zum Aufbringen Verstärkungsmaterial (14) ausgestattet ist.

3. Vorrichtung nach Anspruch 1 oder 2,
**dadurch gekennzeichnet, dass** die mindestens eine Weiterbearbeitungsstation (16; 22) mit einem Schweißwerkzeug (16.1), Stanzwerkzeug und/oder einem Clinchwerkzeug (27) zum Verbinden von Verstärkungsmaterial (14) mit mindestens einem der Blechbändern (1, 2) ausgestattet ist.

4. Vorrichtung nach einem der Ansprüche 1 bis 3,
**dadurch gekennzeichnet, dass** zwischen der Schweißstation (10), mittels welcher die mindestens zwei Blechbänder (1, 2) entlang mindestens einer ihrer Längskanten miteinander verschweißbar sind, und der mindestens einen Weiterbearbeitungsstation (16) eine Speichereinrichtung zur Aufnahme einer Bandschlaufe (18) des aus den mindestens zwei Blechbändern (1, 2) hergestellten maßgeschneiderten Blechbandes (12) angeordnet ist.

5. Vorrichtung nach Anspruch 3 oder 3 und 4, **dadurch gekennzeichnet, dass** das Schweißwerkzeug (16.1), das Stanzwerkzeug und/oder das Clinchwerkzeug (27) mittels eines beweglich gelagerten Trägers (21) gehalten und mittels des Trägers (21) in Bandlaufrichtung vor- und zurückbewegbar ist.

6. Vorrichtung nach einem der Ansprüche 1 bis 5,
**dadurch gekennzeichnet, dass** der mindestens einen Weiterbearbeitungsstation (16, 22) in Bandlaufrichtung eine Aufwickeleinrichtung (20) zum Aufwickeln des aus den mindestens zwei Blechbändern (1, 2) hergestellten maßgeschneiderten Blechbandes (12) nachgeordnet ist.

7. Vorrichtung nach einem der Ansprüche 1 bis 6, **dadurch gekennzeichnet, dass** der mindestens einen Weiterbearbeitungsstation (16; 22; 30) in Bandlaufrichtung eine Trenneinrichtung (31) zum Ablängen des aus den mindestens zwei Blechbändern (1, 2) hergestellten maßgeschneiderten Blechbandes (12) oder Profils (12') nachgeordnet ist.

8. Vorrichtung nach einem der vorangehenden Ansprüche, **dadurch gekennzeichnet, dass** Mittel (15, 25; 28) für eine zusätzliche Fertigungsfunktion zur Erzielung einer höheren Fertigungstiefe an den verschweißten Blechbändern in der Fertigungslinie vorhanden sind, die als Werkzeuge zum Lochen ausgestattet sind.

9. Vorrichtung nach einem der vorangehenden Ansprüche, **dadurch gekennzeichnet, dass** Mittel (15, 25; 28) für eine zusätzliche Fertigungsfunktion zur Erzielung einer höheren Fertigungstiefe an den verschweißten Blechbändern in der Fertigungslinie vorhanden sind, die als Werkzeuge zum Umformen von mindestens einem der miteinander verbundenen Blechbändern (1, 2) ausgestattet sind.

10. Verfahren zum Herstellen eines maßgeschneiderten Blechbandes (12) oder Metallprofils (12'), bei dem mindestens zwei Blechbänder (1, 2) mittels mindestens zweier Bandzuführungseinrichtungen (8, 9) einer Schweißstation (10) zugeführt und entlang ihrer Längskanten miteinander verschweißt werden, wobei die mindestens zwei Bandzuführungseinrichtungen (8, 9) und die mindestens eine Schweißstation (10) eine Fertigungslinie definieren, **dadurch gekennzeichnet, dass** die mindestens zwei miteinander verschweißten Blechbänder durch Verwendung einer Vorrichtung nach einem der Ansprüche 1 bis 9 in der Fertigungslinie zur Erzielung einer höheren Fertigungstiefe an den verschweißten Blechbändern weiterbearbeitet werden.

11. Verfahren nach Anspruch 10,
**dadurch gekennzeichnet, dass** das Verschweißen der mindestens zwei Blechbänder (1, 2) in der Schweißstation (10) bei kontinuierlichem Bandvorschub durchgeführt wird, dass die miteinander verschweißten Blechbänder (1, 2) in Bandlaufrichtung hinter der Schweißstation (10) derart geführt werden, dass sie eine Bandschlaufe (18) bilden, und dass die verschweißten Blechbänder (1, 2) in Bandlaufrichtung hinter der Bandschlaufe (18) intermittierend weiterbewegt werden, wobei mindestens eines der Blechbänder (1, 2) während einer Stillstandphase eines Abschnittes des maßgeschneiderten Blechbandes (12) in der mindestens einen Weiterbearbeitungsstation (16) bearbeitet wird.

12. Verfahren nach Anspruch 10,
**dadurch gekennzeichnet, dass** das Verschweißen der mindestens zwei Blechbänder (1, 2) in der Schweißstation (10) und auch das Bearbeiten mindestens eines der miteinander verschweißten Blechbänder (1, 2) in der mindestens einen Weiterbearbeitungsstation (22) jeweils bei kontinuierlichem Bandvorschub durchgeführt werden, wobei ein Schweißwerkzeug (16.1), ein Stanzwerkzeug und/oder ein Clinchwerkzeug (27) zum Bearbeiten des mindestens einen der miteinander verschweißten Blechbänder (1, 2) in der Weiterbearbeitungsstation (22) mit den miteinander verschweißten Blechbändern (1, 2) mitbewegt werden/wird.

13. Verfahren nach einem der Ansprüche 10 bis 12,
**dadurch gekennzeichnet, dass** auf mindestens eines der miteinander verschweißten Blechbänder (1, 2) in der Fertigungslinie Verstärkungen (14) in Form von Blechzuschnitten aufgebracht und mit dem mindestens einen Blechband (1, 2) durch Fügen verbunden werden.

14. Verfahren nach einem der Ansprüche 10 bis 13,
**dadurch gekennzeichnet, dass** zum Herstellen des maßgeschneiderten Blechbandes (12) oder Metallprofils (12') Blechbänder (1, 2) unterschiedlicher Dicke, Güte und/oder Oberflächenbeschaffenheit verwendet werden und/oder Blechbänder (1, 2) unterschiedlicher Metallsorten, insbesondere Aluminiumband und Magnesiumband verwendet werden.

## Claims

1. A device for producing a customized sheet metal band (12) with at least one welding station (10), by means of which at least two sheet metal bands (1, 2) may be welded together along their longitudinal edges, wherein there are at least two band feed devices (8, 9) for respectively feeding one of the sheet metal bands in the at least one welding station (10), wherein the at least two band feed devices (8, 9) and the at least one welding station (10) define a production line,
**characterized in that**
the production line comprises a further processing station (15, 16, 22, 22) for further processing, which is arranged downstream of the at least one welding station (10) in the band running direction and is provided with tools for applying reinforcing material (14) at localized points of at least one of the mutually connected sheet metal bands (1, 2).

2. Device according to claim 1,
**characterized in that**
the at least one further processing station is provided with a handling device and/or a robot (15) for applying reinforcing material (14).

3. Device according to claim 1 or 2,
**characterized in that**
the at least one further processing station (16, 22) is equipped with a welding tool (16.1), a punching tool and/or a clinching tool (27) for connecting reinforcing material (14) to at least one of the sheet metal bands (1, 2).

4. Device according to claim 1 to 3,
**characterized in that**
a storage device for receiving a metal loop (18) comprising the customized sheet metal band (12) made from the at least two sheet metal bands (1, 2) is provided between the welding station (10), by means of which the at least two sheet metal bands (1, 2) are welded together along at least one of their longitudinal edges, and the at least one further processing station (16).

5. Device according to claim 3 or 3 and 4,
**characterized in that**
the welding tool (16.1), the punching tool and/or the clinching tool (27) is/are held by means of a movably-supported carrier (21) and is/are movable forwards and backwards by means of the carrier (21).

6. Device according to one of the claims 1 to 5,
**characterized in that**
a winding device (20) for winding the customized sheet metal band (12) produced from the at least two sheet metal bands (1, 2) is arranged downstream of the at least one further processing station (16, 22) in the band running direction.

7. Device according to one of the claims 1 to 6,
**characterized in that**
a separating device (31) is arranged downstream in the band running direction of the at least one further processing station (16; 22; 30) for cutting to length the customized sheet metal bands (12) or section (12') produced from at least two sheet metal bands (1, 2).

8. Device according to one of the preceding claims,
**characterized in that**
means (15, 25; 28) are provided for an additional production function for achieving a higher production depth of the welded sheet metal bands in the production line, wherein they are provided as tools for punching.

9. Device according to one of the preceding claims, **characterized in that**
means (15, 25, 28) are provided for an additional production function for achieving a higher production depth of the welded sheet metal bands in the production line, wherein the production line is equipped with tools for shaping at least one of the mutually connected sheet metal bands (1, 2).

10. Method for the production of a customized sheet metal band (12) or metal section (12'), wherein at least two sheet metal bands are fed to a welding station (10) by means of at least two band feeding devices (8, 9), and welded together along their longitudinal edges wherein the at least two band feeding devices (8, 9) and the at least one welding station (10) define a production line,
**characterized in that**
the at least two sheet metal bands are welded together by means of a device according to one of the claims 1 to 9 in the production line in order to achieve a higher production depth of the welded sheet metal bands.

11. Method according to claim 10,
**characterized in that**
the welding of the at least two sheet metal bands (1, 2) is carried out in the welding station (10) with continuous band feed, wherein the welded-together sheet metal bands (1, 2) are so guided downstream of the welding station (10) in the band running direction that they form a belt loop (18), wherein the welded sheet metal bands (1, 2) are moved intermittently forward downstream of the band loop (18) in the band running direction, wherein at least one of the sheet metal bands (1, 2) during a stationary phase of a section of the customized sheet metal band (12) is processed in the at least one further processing station (16).

12. Method according to claim 10,
**characterized in that**
the welding of the at least two sheet metal bands (1, 2) in the welding station (10) and also the processing of at least one of the welded-together sheet metal bands (1, 2) are respectively performed in the at least one further processing station (22) with continuous band feed, wherein a welding tool (16.1), a punching tool and/or a clinching tool (27) for processing at least one of the welded-together metal bands (1, 2) is/are moved with the welded-together sheet metal bands (1, 2) in the further processing station (22).

13. Method according to one of the claims 10 to 12,
**characterized in that**
reinforcing material (14) in the form of sheet metal blanks is applied in the production line to at least one of the welded-together sheet metal bands (1, 2), and connected to the at least one sheet metal band (1, 2) by joining.

14. Method according to one of the claims 10 to 13,
**characterized in that**
sheet metal bands (1, 2) of different thickness, quality and/or surface texture are used to produce the customized sheet metal band (12) or metal section (12'), and/or sheet metal bands (1, 2) of different metal grades, in particular aluminum bands and magnesium bands, are used.

## Revendications

1. Dispositif de fabrication d'une bande de tôle (12) découpée sur mesure, avec au moins un poste de soudage (10) au moyen duquel au moins deux bandes de tôle (1,2) peuvent être assemblées l'une à l'autre par soudage le long de leurs arêtes longitudinales, et au moins deux systèmes d'acheminement de bande (8, 9) pour l'acheminement de respectivement une des bandes de tôle dans le poste de soudage (10) au moins au nombre de un, les systèmes d'acheminement de bande (8, 9) au moins au nombre de deux et le poste de soudage (10) au moins au nombre de un définissant une ligne de fabrication, **caractérisé en ce que**, dans la ligne de fabrication, au moins un poste d'usinage ultérieur (15, 16 ; 22, 23 ; 28) est intégré pour l'usinage ultérieur, lequel est disposé en aval du poste de soudage (10) au moins au nombre de un dans le sens de marche de la bande, et qui est équipé d'outils pour l'application de matériau de renforcement (14) dans des emplacements localisés d'au moins une des bandes de tôle (1, 2) raccordées entre elles.

2. Dispositif selon la revendication 1,
**caractérisé en ce que** le poste d'usinage ultérieur au moins au nombre de un est équipé d'un appareil de manipulation et/ou d'un robot (15) pour l'application de matériau de renforcement (14).

3. Dispositif selon la revendication 1 ou 2,
**caractérisé en ce que** le poste d'usinage ultérieur (16 ; 22) au moins au nombre de un est équipé d'un outil de soudage (16.1), d'un outil de poinçonnage et/ou d'un outil de clinchage (27) pour le raccordement d'un matériau de renforcement (14) à au moins une des bandes de tôle (1, 2).

4. Dispositif selon l'une des revendications 1 à 3,
**caractérisé en ce que**, entre le poste de soudage (10), au moyen duquel les bandes de tôle (1, 2) au moins au nombre de deux peuvent être assemblées l'une à l'autre par soudage le long d'au moins une de leurs arêtes longitudinales, et le poste d'usinage ultérieur (16) au moins au nombre de un, il est disposé un dispositif de stockage pour la réception d'une boucle de bande (18) de la bande de tôle (12) découpée sur mesure fabriquée à partir des bandes de tôle (1, 2) au moins au nombre de deux.

5. Dispositif selon la revendication 3 ou selon les revendications 3 et 4,
**caractérisé en ce que** l'outil de soudage (16.1), l'outil de poinçonnage et/ou l'outil de clinchage (27) est retenu au moyen d'un support (21) supporté de façon mobile et peut être déplacé vers l'avant et vers l'arrière dans le sens de marche de la bande au moyen du support (21).

6. Dispositif selon l'une des revendications 1 à 5,
**caractérisé en ce qu'**un système d'enroulement (20) destiné à l'enroulement de la bande de tôle (12) découpée sur mesure fabriquée à partir des bandes de tôle (1, 2) au moins au nombre de deux est disposé en aval du poste d'usinage ultérieur (16, 22) au moins au nombre de un dans le sens de marche de la bande.

7. Dispositif selon l'une des revendications 1 à 6,
**caractérisé en ce qu'**un système de séparation (31) destiné à couper à la longueur voulue la bande de tôle (12) ou le profilé (12') fabriqué(e) à partir des bandes de tôle (1, 2) découpées sur mesure au moins au nombre de deux est disposé en aval du poste d'usinage ultérieur (16 ; 22 ; 30) au moins au nombre de un dans le sens de marche de la bande.

8. Dispositif selon l'une des revendications précédentes, **caractérisé en ce qu'**il y a sur la ligne de fabrication des moyens (15, 25 ; 28) pour une fonction de fabrication supplémentaire en vue d'obtenir une profondeur de fabrication plus élevée sur les bandes de tôle soudées, lesquels moyens sont équipés en tant qu'outils pour la perforation.

9. Dispositif selon l'une des revendications précédentes, **caractérisé en ce qu'**il y a sur la ligne de fabrication des moyens (15, 25 ; 28) pour une fonction de fabrication supplémentaire en vue d'obtenir une profondeur de fabrication plus élevée sur les bandes de tôle soudées, lesquels moyens sont équipés en tant qu'outils pour le façonnage d'au moins une des bandes de tôle (1, 2) raccordées entre elles.

10. Procédé de fabrication d'une bande de tôle (12) ou d'un profilé en métal (12') découpé(e) sur mesure, dans lequel au moins deux bandes de tôle (1, 2) sont acheminées à un poste de soudage (10) au moyen d'au moins deux systèmes d'acheminement de bande (8, 9) et assemblées l'une à l'autre par soudage le long de leurs arêtes longitudinales, les systèmes d'acheminement de bande (8, 9) au moins au nombre de deux et le poste de soudage (10) au moins au nombre de un définissant une ligne de fabrication, **caractérisé en ce que** les bandes de tôle au moins au nombre de deux assemblées l'une à l'autre par soudage font l'objet d'un usinage ultérieur par l'utilisation d'un dispositif selon l'une des revendications 1 à 9 dans la ligne de fabrication en vue d'obtenir une profondeur de fabrication plus élevée sur les bandes de tôle soudées.

11. Procédé selon la revendication 10,
**caractérisé en ce que** le soudage des bandes de tôle (1, 2) au moins au nombre de deux dans le poste de soudage (10) est effectué avec une avance de bande continue, **en ce que** les bandes de tôle (1, 2) assemblées l'une à l'autre par soudage sont guidées derrière le poste de soudage (10) dans le sens de marche de la bande de telle sorte qu'elles forment une boucle de bande (18), et **en ce que** les bandes de tôle (1, 2) soudées sont déplacées de façon supplémentaire derrière la boucle de bande (18) dans le sens de marche de la bande de façon intermittente, au moins une des bandes de tôle (1, 2) étant usinée pendant une phase d'arrêt d'un tronçon de la bande de tôle (12) découpée sur mesure dans le poste d'usinage ultérieur (16) au moins au nombre de un.

12. Procédé selon la revendication 10,
**caractérisé en ce que** le soudage des bandes de tôle (1, 2) au moins au nombre de deux dans le poste de soudage (10) et également l'usinage d'au moins une des bandes de tôle (1, 2) assemblées l'une à l'autre par soudage sont effectués dans le poste d'usinage ultérieur (22)au moins au nombre de un respectivement avec une avance de bande continue, un outil de soudage (16.1), un outil de poinçonnage et/ou un outil de clinchage (27) destinés à l'usinage d'au moins une des bandes de tôle (1, 2) assemblées l'une à l'autre par soudage dans le poste d'usinage ultérieur (22) étant déplacés conjointement avec les bandes de tôle (1, 2) assemblées l'une à l'autre par soudage.

13. Procédé selon l'une des revendications 10 à 12, **caractérisé en ce que**, sur au moins une des bandes de tôle (1, 2) assemblées l'une à l'autre par soudage dans la ligne de fabrication, des renforts (14) sous forme de flans de tôle sont appliqués et raccordés par assemblage à la bande de tôle (1, 2) au moins au nombre de un.

14. Procédé selon l'une des revendications 10 à 13,
**caractérisé en ce que**, pour la fabrication de la bande de tôle (12) ou du profilé (12') découpé(e) sur mesure, des bandes de tôle (1, 2) d'épaisseur, de qualité et/ou d'état de surface différents sont utilisées et/ou des bandes de tôle (1, 2) de sortes de métal différentes, en particulier bande d'aluminium et bande de magnésium, sont utilisées.
